# EUROPÄISCHE PATENTSCHRIFT

(11) **EP 0 968 362 B1**
(45) Veröffentlichungstag und Bekanntmachung des Hinweises auf die Patenterteilung: **17.03.2004**
(21) Anmeldenummer: 98966541.9
(22) Anmeldetag: 15.12.1998
(51) Int. Cl.: F02D 41/02, F01N 3/08

(54) **BETRIEB EINES VERBRENNUNGSMOTORS IN VERBINDUNG MIT EINEM NOx-SPEICHER-KATALYSATOR**
Operating of an internal combustion engine in conjunction with an NOx-accumulator catalytic converter
Procédé de fonctionnement d'un moteur à combustion interne en association avec un catalysateur à accumulation de NOx

(30) Priorität: 15.12.1997 DE 19755600
(43) Veröffentlichungstag der Anmeldung: 05.01.2000
(73) Patentinhaber: ROBERT BOSCH GMBH, 70442 Stuttgart (DE)
(72) Erfinder: SCHNAIBEL, Eberhard, D-71282 Hemmingen (DE); BLUMENSTOCK, Andreas, D-71638 Ludwigsburg (DE); WINKLER, Klaus, D-71277 Rutesheim (DE)
(86) Internationale Anmeldenummer: PCT/DE1998/003677
(87) Internationale Veröffentlichungsnummer: WO 1999/031367

(56) Entgegenhaltungen:
- EP-A- 0 560 991
- EP-A- 0 690 213
- EP-A- 0 733 787
- EP-B- 0 986 697
- WO-A-98/55742

## Beschreibung

Die Erfindung betrifft den Betrieb eines Verbrennungsmotors in Verbindung mit einem NOx-Speicherkatalysator. Im Bereich der Verbrennung mit magerem Kraftstoff/Luftgemisch (Lambda größer 1) erfüllt der Drei-Wege-Katalysator die Anforderungen an die Abgasqualität nicht mehr. Hier kommen NOx-Speicherkatalysatoren zum Einsatz, welche die im mageren Motorbetrieb emittierten Stickoxide speichern. Durch den Betrieb des Motors im fetten Bereich (Lambda kleiner 1) werden gespeicherte Nitrate freigesetzt und zu Stickstoff reduziert. Idealerweise wird der Motor in einer ersten Phase mager betrieben, bis der NOx-Speicherkatalysator voll ist, d.h. bis er keine weiteren Stickoxide mehr speichern kann. Daran schließt sich idealerweise eine zweite Phase mit fettem Betrieb für diejenige Zeitspanne an, die zur Regeneration des NOx-Speicherkatalysators benötigt wird. Die Speicherfähigkeit des NOx-Katalysators im mageren Betriebsbereich ist beladungsabhängig und nimmt kontinuierlich ab. Dauert die erste Phase zu lange, kommt es zu unerwünschten Stickoxid-Emissionen. Eine zu lang andauernde zweite Phase hat erhöhte HC- und CO-Emissionen zur Folge. Es besteht daher das Problem, den Wechsel zwischen beiden Phasen so vorzunehmen, daß weder erhöhte NOx- noch HC-Emissionen auftreten.

In diesem Zusammenhang ist es aus der EP 560 991 B1 bekannt, die in einer ersten Phase eingespeicherte NOx-Menge durch eine aufsummierte Motordrehzahl abzuschätzen und dann in die zweite Phase zu wechseln, wenn die aufsummierte Motordrehzahl einen vorbestimmten Schwellwert überschreitet. Die gespeichert Menge wird damit modelliert. Ihr tatsächlicher Wert wird nicht erfaßt. Die Modellierung kann die tatsächlich eingespeicherte Menge nur unvollkommen nachbilden. Daher ist die erste Phase entweder zu lang oder zu kurz mit den o.a. nachteiligen Folgen für die Abgasqualität.

Die nicht vorveröffentlichte DE 1 97 39 848 beschreibt eine Möglichkeit, das Ende der zweiten Phase mit fettem Motorbetrieb, also Sauerstoffmangel im Abgas festzulegen. Dazu dient eine sauerstoffmessende Sonde im Abgas hinter dem Speicherkatalysator. Sobald diese Sonde einen Übergang von einem mageren auf ein fettes Gemisch erkennt, bedeutet dies, daß der Speicherkatalysator nicht mehr genug Sauerstoff zur Oxidation der Kohlenwasserstoffe und des Kohlenmonoxides abgibt und von Sauerstoff enthaltendem NOx entladen ist (O2-Speicher und NOx-Speicher geleert). Daraufhin kann die zweite Phase mit Sauerstoffmangel beendet werden und wieder zur ersten Phase mit magerem Gemisch (Sauerstoffüberschuß) umgesteuert werden. Damit wird nach jedem Speicherintervall bewußt ein Durchbruch von CO und HC zur Beendigung der Regenerationsphase in Kauf genommen. Bei jedem Phasenwechsel treten damit unerwünschte CO und HC-Emissionen auf, die in der Summe über viele Phasenwechsel Probleme bei der Einhaltung von Schadstoffgrenzwerten bereiten können. Zudem wird bei jedem Phasenwechsel der Sauerstoffspeicher des Systems geleert und damit der Kraftstoffverbrauch unnötig erhöht.

Aus der EP 733 787 A2 ist eine Vorrichtung zur Steuerung der Zufuhr eines Reduktionsmittels eines NOx-Speicherkatalysators bekannt geworden, bei dem die in der ersten Phase in den NOx-Speicherkatalysator eingelagerte NOx-Menge aus dem Signalverlauf eines hinter dem Speicherkatalysator angeordneten Abgassensors ermittelt wird. Die anschließende zweite Phase, die der Regenerationsphase des NOx-Speicherkatalysators entspricht, wird zeitlich in Abhängigkeit von dem ermittelten Speichervermögen des NOx-Speicherkatalysators beeinflusst. Ziel ist es, anhand eines Modells der im NOx-Speicherkatalysator eingelagerten NOx-Menge die zweite Phase mit der Regeneration rechtzeitig einzuleiten. Das Modell wird mittels eines Korrekturfaktors korrigiert, der aus der während der Regeneration gemessenen NOx-Menge, die der eingelagerten NOx-Menge entspricht, bestimmt wird.

Aus der EP 986 697 B2 ist ein Verfahren zur Regeneration eines NOx-Speicherkatalysators bekannt geworden, bei dem die einem NOx-Speicherkatalysator zugeführte Reduktionsmittelmenge in Abhängigkeit vom Ausgangssignal eines nach dem Speicherkatalysator angeordneten Abgassensors bestimmt wird. Berücksichtigt wird hierbei das Signalverhalten des Abgassensors sowohl während der ersten Phase, bei der die Brennkraftmaschine mager betrieben wird, als auch während einer zweiten Phase, die der Regenerationsphase entspricht.

Der Erfindung liegt die Aufgabe zugrunde, eine Steuerung der Regeneration eines Speicherkatalysators anzugeben, die dem Ideal eines optimalen Ausnutzens der NOx-Speicherfähigkeit durch jeweiliges vollständiges Befüllen und Entladen des Speicherkatalysators unter gleichzeitiger Verminderung der unerwünschten HC-und CO-Emissionen näher kommt.

Die Aufgabe wird in die im unabhängigen Anspruch angegebenen Merkmale gelöst.

Im Einzelnen erfolgt in einem Ausführungsbeispiel der Erfindung eine Steuerung des Kraftstoff-/ Luftverhältnisses beim Betrieb eines Verbrennungsmotors mit einem Katalysator und einem in Strömungsrichtung hinter dem Katalysator angeordneten Abgassensor so, dass abwechselnd ein magerer und ein fetter Betrieb des Verbrennungsmotors gesteuert wird, wobei der Grad der Anfettung und/oder die Länge der Fettphasen abhängig vom Verhalten des Signals des genannten Abgassensors ausschließlich in einer vorhergehenden Fettphase geändert werden.

Dabei wird der Motor in zeitlichen Mittel mit mageren Gemisch betrieben.

Erfindungsgemäß wird die Zufuhr von Reduktionsmittels nicht allein von einem auf Betriebsparameter des Motors gestützten.

Modell gesteuert vorgegeben, sondern mit Hilfe einer hinter dem Katalysator angeordneten Abgassonde adaptiert.

Zeigt die genannte Abgassonde ein Zuviel an Reduktionsmittel in einer Fettphase an, wird die Menge des zuzuführenden Reduktionsmittels für eine nächste Fettphase verringert. Dies kann bspw. über eine Verkürzung der Fettphase oder über eine Verringerung des Grades der Anfettung geschehen.

Bei ausreichender Verringerung wird die genannte Abgassonde am Ende der nächsten Fettphase kein Zuviel an Reduktionsmittel mehr anzeigen. Dann wird die Menge des in folgenden Fettphasen zuzuführenden Reduktionsmittels sukzessive solange erhöht, bis erneut eine Reaktion des hinter dem Katalysator angeordneten Abgassensors auftritt. Der unerwünschte Durchbruch von Reduktionsmittels erfolgt daher bei dem erfindungsgemäßen Verfahren selten. Dadurch wird die Abgasqualität vorteilhaft verbessert. Die Erfindung adaptiert gewissermaßen die Menge des zuzuführenden Reduktionsmittels in einer geschlossenen Wirkungskette.

Als hinter dem Katalysator angeordneter Sensor kommt eine übliche, sauerstoffempfindliche Lambdasonde oder bspw. ein HC-Sensor ein Frage.

Die Erfindung ist nicht auf eine Fettsteuerung des Motors zur Bereitstellung von HC und CO im Abgas als Reduktionsmittel beschränkt. Das Reduktionsmittel kann auch aus anderen Quellen, bspw. als Harnstoff aus einem Vorratstank gesteuert dosiert werden.

Im folgenden wird ein Ausführungsbsp. mit Bezug auf die Figuren erläutert.

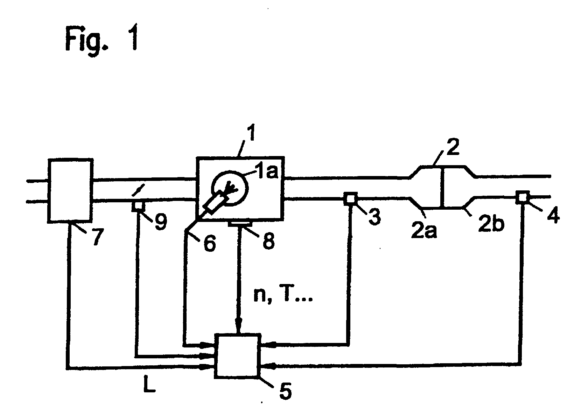

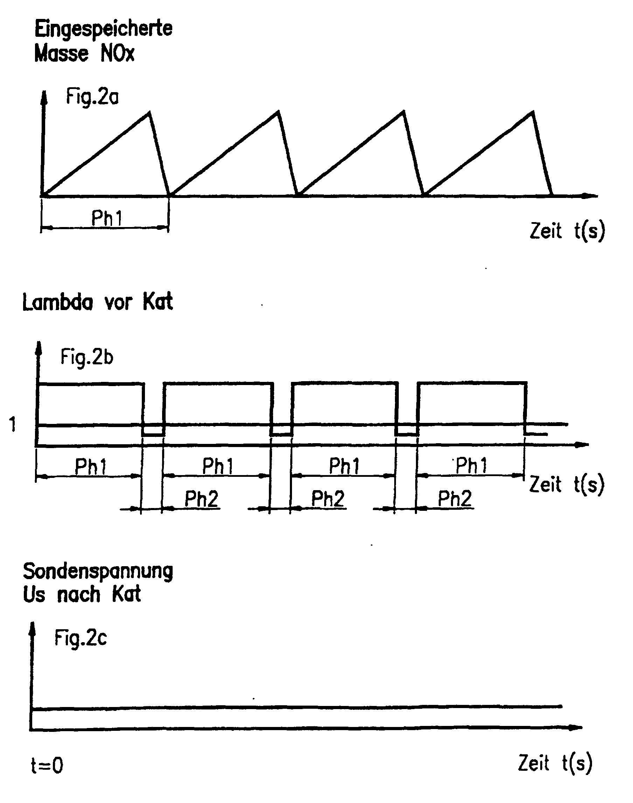

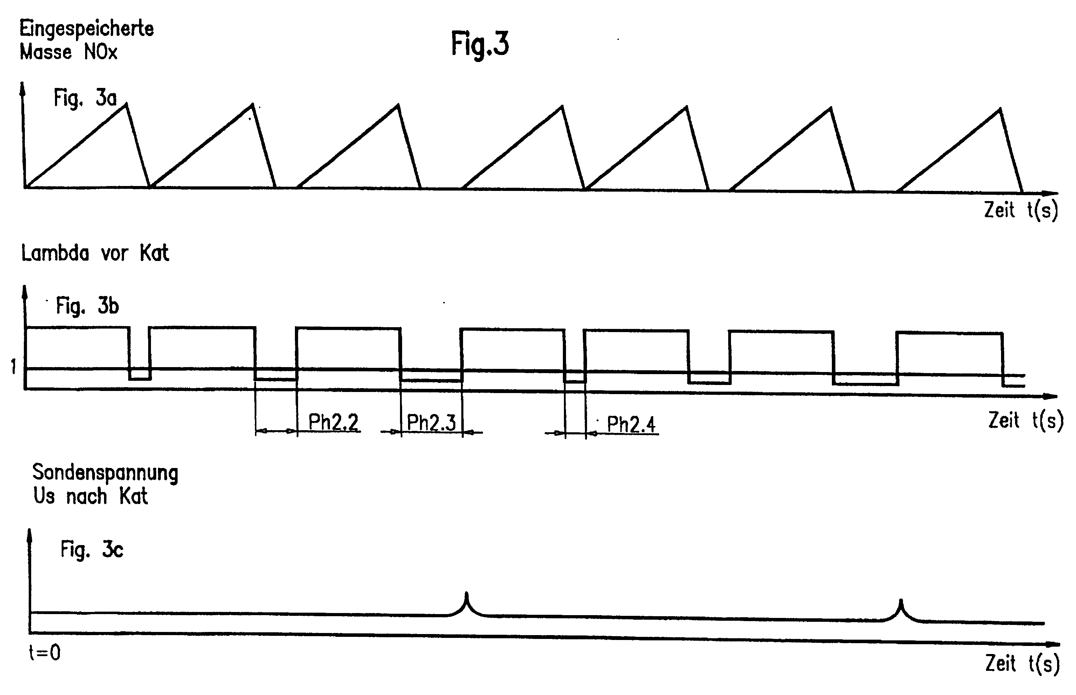

Figur 1 zeigt das technische Umfeld, in dem die Erfindung ihre Wirkung entfaltet. Figur 2 stellt ein Ausführungsbeispiel des erfindungsgemäßen Verfahrens dar und Figur 3 veranschaulicht die Erfindung durch eine graphische Darstellung des Füllungsgrades von NOx-Speicher-Katalysatoren bei der Durchführung des erfindungsgemäßen Verfahrens.

Im einzelnen zeigt Figur 1 einen Verbrennungsmotor 1 mit einem Katalysator 2, Abgassonden 3 und 4, einem Steuergerät 5, einem Kraftstoffzumeßmittel 6, sowie verschiedenen Sensoren 7, 8, 9 für Last L und Drehzahl n sowie ggf. weitere Betriebsparameter des Verbrennungsmotors wie Temperaturen, Drosselklappenstellung etc.. Der Katalysator weist einen ersten Teil 2a und einen zweiten Teil 2b auf. Teil 2a stellt den Nox-Speicherkatalysator dar. Teil 2b repräsentiert einen integrierten oder nachgeschalteten Sauerstoffspeicher.

Aus den genannten und ggf. weiteren Eingangssignalen bildet das Steuergerät u.a. Kraftstoffzumeßsignale, mit denen das Kraftstoffzumeßmittel 6 angesteuert wird. Das Kraftstoffzumeßmittel 6 kann sowohl für eine sogenannte Saugrohreinspritzung als auch für eine Benzindirekteinspritzung in die Brennräume der einzelnen Zylinder ausgestaltet sein. Die Variation der Gemischzusammensetzung kann über eine Veränderung der Einspritzimpulsbreiten erfolgen, mit denen das Kraftstoffzumeßmittel angesteuert wird. Der Kern des erfindungsgemäßen Verfahrens betrifft in diesem Umfeld in erster Linie das Steuergerät 5 und die hinter dem Katalysator angeordnete Abgassonde 4. Die erfindungsgemäße Vorrichtung wird daraus durch die Merkmale der Vorrichtungsansprüche realisiert.

Der Verbrennungsmotor wird abwechselnd in ersten Phasen mit gegenüber der stöchiometrischen Gemischzusammensetzung (Lambda = 1) kraftstoffärmerem (magerem) Gemisch und in zweiten Phasen mit kraftstoffreicherem (fetten) Gemisch betrieben. In den ersten Phasen speichert der NOx-Katalysator die NOx-Emissionen des Motors ein. In den zweiten Phasen regeneriert eine definierte Anfettung den Speicherkatalysator. Die Regenerierung erfolgt über eine Reduktion der gespeicherten Nitrate zu Stickstoff (N2). Um hohe Speicher- und Konvertierungsraten des NOx-Speicherkatalysators zu erreichen, muß der Speicher 2a nahezu vollständig geleert und somit ausreichend Reduktionsmittel zugeführt werden.

Fig. 2 veranschaulicht den Phasenwechsel in Verbindung mit einer Darstellung der eingespeicherten NOx-Menge (Fig. 2a), dem zugehörigen Kraftstoff/Luftverhältnis Lambda, wie es die vor dem Katalysator angeordnete Abgassonde 3 (Fig. 2b) erfaßt und dem signalverhalten der hinter dem Katalysator angeordneten Abgassonde 4 (Fig. 2c) für den anzustrebenden Idealfall jeweils vollständiger Füllung und Entleerung des NOx-Speicherkatalysators.

Zum Zeitpunkt t=0 sei der NOx-Speicherkatalysator leer. in der folgenden ersten Phase Ph1 wird der Verbrennungsmotor mit magerem Gemisch (Lambda größer 1) betrieben. Die dabei emittierten Stickoxide werden im Speicherkatalysator gespeichert. Die erste Phase (Magerphase) wird idealerweise bei vollem Speicherkatalysator 2a beendet. An die erste Phase schließt sich eine zweite Phase Ph2 an, in der der Speicherkatalysator regeneriert wird. In diesem Ausführungsbsp. erfolgt die Regenerierung mit Hilfe eines fetten Motorbetriebs in der Phase Ph2. Dabei emittiert der mit kraftstoffreicherem Gemisch arbeitende Verbrennungsmotor unverbranntes HC und CO als Reduktionsmittel. Unter Einwirkung des Katalysators reagiert das Reduktionsmittel mit den gespeicherten Stickoxiden zu Wasser, CO2 und N2, die mit dem Abgas weiter transportiert werden. Der Speicher wird dadurch erneut für Stickoxide aufnahmefähig, d.h. regeneriert. Zwischen den Phasen Ph1 und Ph2 wird vom Steuergerät 5 im fortlaufenden Wechsel umgesteuert.

Im Idealfall erfolgt die Regenerierung (Phase 2) bis zur vollständigen Entleerung des Speicherkatalysators 2a und endet, bevor überschüssiges Reduktionsmittel hinter dem Katalysator auftritt. Das Auftreten von überschüssigem Reduktionsmittel geht mit Sauerstoffmangel einher und kann daher mit einem sauerstoffempfindlichen Abgassensor 4 detektiert werden. Alternativ dazu können bspw. überschüssige Kohlenwasserstoffe auch direkt mit einem HC-Sensor anstelle oder in Ergänzung zum sauerstoffempfindlichen Abgassensors 4 nachgewiesen werden. Nach Fig. 2a ist der Speicherkatalysator jeweils am Ende einer Fettphase Ph2 vollständig leer und nach Fig. 2c ändert sich das Signalverhalten des hinter dem Katalysator angeordneten Abgassensors 4 dabei nicht. Das dargestellte niedrige Niveau des Sensorsignals repräsentiert dabei einen Sauerstoffüberschuß und damit den im zeitlichen Mittel überwiegenden verbrauchsoptimierten Magerbetrieb des Vebrennungsmotors.

Da eine exakte Berechnung der notwendigen Reduktionsmittelmenge im Motorbetrieb nicht möglich ist, besitzt ist der Katalysator 2 vorteilhafterweise den integrierten oder nachgeschalteten Sauerstoffspeicher 2b, der als Puffer dient. Eine unzulässig hohe Zufuhr an Reduktionsmittel CO und HC wird mit dem im Sauerstoffspeicher 2b gespeicherten Sauerstoff reagieren. Der nachgeschaltete Sauerstoffspeicher wird durch überschüssiges Reduktionsmittel idealerweise nur zur Hälfte geleert. Der nachgeschaltete Sauerstoffspeicher erlaubt eine gewisse Überdosierung des Reduktionsmittels, die zur Sicherstellung der vollständigen Entleerung des Speicherkatalysators 2a vorteilhaft ist. Die angestrebte Leerung des Sauerstoffspeichers bis zur Hälfte ermöglicht einen Ausgleich von Dosierungsunschärfen, die im realen Betrieb unvermeidlich sind.

Fig. 3 veranschaulicht die Erfindung in Ablehnung an die Darstellung der Fig. 2.

Wie aus Fig. 3b ersichtlich, erfolgt die Steuerung des Verbrennungsmotors zunächst so, daß der hinter dem Katalysator angeordnete Sensor 4 sein Signalverhalten nicht ändert und auf einem für mageres Gemisch charakteristischen Pegel bleibt. Dies kann bedeuten, daß die Länge der Fettphasen bereits optimal ist. D.h.: Bis auf Dosierungsunschärfen, die vom Sauerstoffspeicherkatalysator 2b gepuffert werden, entspricht die Länge dem Bedarf, so daß der Speicherkatalysator 2a vollständig regeneriert wird. Es kann jedoch auch sein, daß die Länge der Fettphasen nicht für eine vollständige Regeneration des Speicherkatalysators ausreicht. Gewissermaßen testweise wird daher die Länge der Fettphasen sukzessiv vergrößert. Am Ende der dritten dargestellten Fettphase Ph2.3 übersteigt der Reduktionsmitteleintrag in das Katalysatorsystem 2 den durch den Regenerierungsbedarf (2a) plus Puffergröße (2b) vorgegebenen Betrag mit der Folge, daß hinter dem Katalysator Sauerstoffmangel in Verbindung mit einem Überschuß von Reduktionsmittel wie CO und HC auftritt.

Fig. 3c zeigt die resultierende Änderung des Signalverhaltens des Abgassensors 4, die bspw. durch einen Schwellwertvergleich detektierbar ist.

Die zur Auslösung der Signaländerung zugehörigen Fettphase Ph2.3 ist daher gerade zu lang, um vom Katalysatorsystem 2 gepuffert zu werden, während die vorhergehende Fettphase Ph2.2 noch nicht lang genug war um eine Reaktion auszulösen. Der tatsächliche Reduktionsmittelbedarf ist daher mit einer Feinheit auflösbar, die von der Schrittweite der sukzessiven Verlängerungen bestimmt ist.

Folgende Fettphasen Ph2.4 usw. werden verkürzt, wobei das Ausmaß der Verkürzung so bemessen ist, daß der Speicherkatalysator 2a immer noch vollständig regeneriert wird, der Sauerstoffspeicherkatalysator 2b aber nur bis etwa zur Hälfte geleert wird. Anschließend wird das Verfahren wiederholt, die Fettphasen also wieder sukzessiv verlängert. Die Verlängerung muß jedoch nicht zwangsläufig sofort gestartet werden. Es ist auch denkbar, den als optimal herausgefundenen Wert für den aktuellen Betriebspunkt zu speichern und erst nach Eintritt vorbestimmter Bedingungen, etwa nach Ablauf einer gewissen Zeit, einen neuen Adaptionsdurchgang zu starten.

Alternativ zur sukzessiven Veränderung der Fettphasen kann auch eine sukzessiv erfolgende Erhöhung des Grades der Anfettung durchgeführt werden. Beide Alternativen können auch kombiniert werden.

## Patentansprüche

1. Vorrichtung zur Steuerung der Zufuhr eines Reduktionsmittels eines NOx-Speicherkatalysators (2) eines Verbrennungsmotors (1), die ein Betreiben des Verbrennungsmotors in ersten Phasen (Ph1) mit magerem Kraftstoff-/Luft-Gemisch und die eine Zufuhr des Reduktionsmittels in zweiten Phasen (Ph2) vorsieht, mit einem in Strömungsrichtung hinter dem Katalysator (2) angeordneten Abgassensor (4), **dadurch gekennzeichnet, dass** eine Änderung der in einer zweiten Phase (Ph2) zugeführten Reduktionsmittelmenge vorgesehen ist in Abhängigkeit vom Verhalten des Signals des Abgassensors (4) ausschließlich in einer vorgehenden zweiten Phase (Ph2).

2. Vorrichtung nach Anspruch 1, **dadurch gekennzeichnet, dass** eine Verringerung der Reduktionsmittelmenge vorgesehen ist.

3. Vorrichtung nach Anspruch 1, **dadurch gekennzeichnet, dass** eine Verringerung der Reduktionsmittelmenge in der ersten nachfolgenden zweiten Phase (Ph2) und eine sukzessive Erhöhung in weiteren nachfolgenden zweiten Phasen (Ph2) vorgesehen ist.

4. Vorrichtung nach Anspruch 3, **dadurch gekennzeichnet, dass** die sukzessive Erhöhung der Reduktionsmittelmenge in den nachfolgenden zweiten Phasen (Ph2) vorgesehen ist, bis eine Reaktion der Abgassonde (4) Sauerstoffmangel und/oder das Auftreten von Kohlenwasserstoffen signalisiert.

5. Vorrichtung nach Anspruch 1, **dadurch gekennzeichnet, dass** die Änderung Reduktionsmittelmenge durch den Grad der Anreicherung des der Brennkraftmaschine zugeführten Kraftstoff-/Luft-Gemisches erfolgt.

6. Vorrichtung nach Anspruch 1, **dadurch gekennzeichnet, dass** die Änderung der Reduktionsmittelmenge durch eine Änderung der Länge der zweiten Phasen (Ph2) erfolgt.

7. Vorrichtung nach Anspruch 1, **dadurch gekennzeichnet, dass** ein Betreiben des Verbrennungsmotors (1) im über mehrere der ersten und zweiten Phasen (Ph1, Ph2) gebildeten Mittel mit magerem Kraftstoff-/Luft-Gemisch vorgesehen ist.

## Claims

1. Device for controlling the supply of a reducing agent to an NOx storage catalytic converter (2) of an internal combustion engine (1), which provides for the internal combustion engine in first phases (Ph1) to be operated with a lean fuel/air mix and provides for the reducing agent to be supplied in second phases (Ph2), having an exhaust-gas sensor (4) arranged downstream of the catalytic converter (2), as seen in the direction of flow, **characterized in that** there is provision for the quantity of reducing agent supplied in a second phase (Ph2) to be altered as a function of the characteristics of the signal from the exhaust-gas sensor (4) exclusively in an ongoing second phase (Ph2).

2. Device according to Claim 1, **characterized in that** there is provision for the quantity of reducing agent to be reduced.

3. Device according to Claim 1, **characterized in that** there is provision for the quantity of reducing agent to be reduced in the very next second phase (Ph2) and to be gradually increased in further subsequent second phases (Ph2).

4. Device according to Claim 3, **characterized in that** the gradual increase in the quantity of reducing agent in the subsequent second phases (Ph2) is intended to continue until a reaction of the part of the exhaust-gas probe (4) signals a deficit of oxygen and/or the occurrence of hydrocarbons.

5. Device according to Claim 1, **characterized in that** the quantity of reducing agent is changed by means of the extent to which the fuel/air mix fed to the internal combustion engine is enriched.

6. Device according to Claim 1, **characterized in that** the quantity of reducing agent is changed by changing the length of the second phases (Ph2).

7. Device according to Claim 1, **characterized in that** on average over a plurality of the first and second phases (Ph1, Ph2), the internal combustion engine (1) is operated with a lean fuel/air mix.

## Revendications

1. Dispositif pour commander l'apport d'un agent réducteur d'un catalyseur à accumulation de NOx (2) d'un moteur à combustion interne (1), qui prévoit un fonctionnement du moteur à combustion interne dans des premières phases (Ph1) avec un mélange carburant/air pauvre, et un apport d'agent réducteur dans des deuxièmes phases (Ph2), comprenant un capteur de gaz d'échappement (4) disposé, en direction de l'écoulement, en aval du catalyseur (2),
**caractérisé en ce qu'**
une modification de la quantité d'agent réducteur apportée dans une deuxième phase (Ph2) est prévue en fonction de la courbe de signal du capteur de gaz d'échappement (4), exclusivement dans une deuxième phase (Ph2) précédente.

2. Dispositif selon la revendication 1,
**caractérisé en ce qu'**
une réduction de la quantité d'agent réducteur est prévue.

3. Dispositif selon la revendication 1,
**caractérisé en ce qu'**
une réduction de la quantité d'agent réducteur est prévue dans la première deuxième phase (Ph2) suivante, et une augmentation successive dans d'autres deuxièmes phases (Ph2) suivantes.

4. Dispositif selon la revendication 3,
**caractérisé en ce que**
l'augmentation successive de la quantité d'agent réducteur est prévue dans les deuxièmes phases (Ph2) suivantes jusqu'à ce que la sonde de gaz d'échappement (4) signale un manque d'oxygène et/ou la présence d'hydrocarbures.

5. Dispositif selon la revendication 1,
**caractérisé en ce que**
la modification de la quantité d'agent réducteur est réalisée en fonction du degré d'enrichissement du mélange carburant/air apporté dans le moteur à combustion interne.

6. Dispositif selon la revendication 1,
**caractérisé en ce que**
la modification de la quantité d'agent réducteur est réalisée par une modification de la longueur des deuxièmes phases (Ph2).

7. Dispositif selon la revendication 1,
**caractérisé en ce qu'**
en moyenne sur plusieurs des premières et deuxièmes phases (Ph1, Ph2), un fonctionnement du moteur à combustion interne (1) est prévu avec un mélange carburant/air pauvre.
